# EUROPÄISCHE PATENTANMELDUNG

(11) **EP 2 644 635 A1**
(43) Veröffentlichungstag der Anmeldung: **02.10.2013**
(21) Anmeldenummer: 12161257.6
(22) Anmeldetag: 26.03.2012
(51) Int. Cl.: C08G 65/00

(54) **Verfahren zur organokatalytischen ringöffnenden Polymerisation**

(71) Anmelder: BASF SE, 67056 Ludwigshafen (DE)
(72) Erfinder: Die Erfindernennung liegt noch nicht vor

(57) **Zusammenfassung**

Die vorliegende Erfindung betrifft ein Verfahren zur organokatalytischen ringöffnenden Polymerisation mindestens eines zur ringöffnenden Polymerisation geeigneten Monomers M, oder von Mischungen daraus, wobei in einem Schritt (i) mindestens eine N-heterocyclische Verbindung in Gegenwart mindestens einer Zerewitinoff-aktiven Verbindung Z1 einer Temperatur von mindestens 80 °C für eine Dauer von mindestens 30 Sekunden ausgesetzt wird, und in einem Schritt (ii) das Monomer M zugegeben und zur Reaktion gebracht wird.

## Beschreibung

Die vorliegende Erfindung betrifft ein Verfahren zur organokatalytischen ringöffnenden Polymerisation.

N-Heterocyclische Carbene (NHC) sind seit einigen Jahren als Initiatoren bzw. Organokatalysatoren für die ringöffnende Polymerisation bekannt (Dove et al., Polymer 47 (2006), 4018). Die Anwendung auf die katalytische Polymerisation von Ethylenoxid (EO) wurde zuerst im Jahr 2006 beschrieben (ACS Polymer Preprints, 47 (2006), 99). Kürzlich wurde auch von Raynaud et al. (JACS, 131 (2009), 3201; WO2009/013344 zusammen mit Rhodia) die stöchiometrische Ringöffnung von Ethylenoxid (EO) in Lösung beschrieben, wobei nach langen Reaktionszeiten zwitterionische PEG (Polyethylenglykol)-Oligomere entstehen. Im Patent werden dabei als Monomere alle technisch relevanten Alkylenoxide sowie als Katalysatoren alle gängigen Carbenstrukturen beansprucht, Beispiele aber nur für EO gegeben (und somit mögliche Vorteile der NHC-Katalysatoren für Propylenoxid (PO) nicht genannt). Zuletzt wurde von der gleichen Arbeitsgruppe im Jahr 2010 auch ein Paper zur PO Polymerisation mit monofunktionellen Startern bei ähnlichen Reaktionsbedingungen publiziert (Chem. Commun., 46 (2010), 3203), wobei aber außer der Metallfreiheit der Reaktion keine Vorteile ersichtlich sind. In allen diesen Arbeiten wird keine Anwendung für die Herstellung von Polyurethan (PU) beansprucht bzw. als besonders vorteilhaft dargestellt.

In der Patentanmeldung WO 2011/141492 wird die ringöffnende Polymerisation von Alkylenoxiden mit NHC-Katalysatoren zur Herstellung von Polyether- und Polyesterolen beschrieben. Als Vorteile dieser Erfindung werden vor allem die hohen Polymerisationsgrade mit PO (>5 PO pro OH-Gruppe des Starters im Gegensatz zu konventionellen Organokatalysatoren) und die Möglichkeit eines EO-Endcapping von PPG (Polypropylenglykol)-cores genannt. Konventionelle Katalysatoren führen entweder zu erheblichen monofunktionellen Nebenprodukten (KOH-Katalyse) oder erlauben keinen wohldefinierten Endcap auf der Mehrheit der sekundären Hydroxygruppen (bei Doppelmetallcyanid (DMC)-Katalyse).

Typische organokatalytische Verfahren mit NHCs beruhen auf deren Nucleophilie bzw. Basizität. Eine entscheidende Hürde für den großtechnischen Einsatz von NHCs stellen aber genau diese Eigenschaften dar: Freie NHCs sind typischerweise hydrolyse- und oxidationsempfindlich (J. Organomet. Chem., 617 (2001), 242). Im Prozess bietet sich daher an, die aktiven NHC-Spezies aus Präkatalysatoren in situ freizusetzen.

Eine Lösung dafür bieten beispielsweise Addukte der NHCs mit z. B. Alkoholen, Chloroform, CS₂, CO₂. Die Verwendung der NHC-Addukte ist hierbei allerdings problematisch wegen des hohen synthetischen Aufwands, der nötig ist, um diese Addukte herzustellen.

Eine weitere Möglichkeit ist die Deprotonierung von Dialkylimidazoliumsalzen (bzw. Imidazolinium-, Thiazolium, ...), schematisch wie folgt darstellbar:

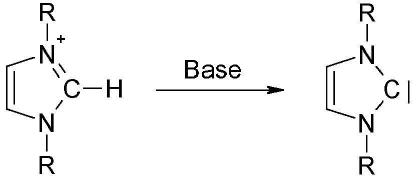

Um diese Deprotonierung zu bewerkstelligen, sind wiederum nach dem Stand der Technik recht starke Basen nötig, z. B. besonders starke Organobasen wie Phosphazene (teuer) oder Alkalitertiärbutanolate (keine Metallfreiheit mehr). Der Einsatz derartiger (Metallsalz-) Basen macht eine Aufarbeitung des Produkts erforderlich.

Es ist auch bekannt, dass die o. g. Dialkylimidazoliumsalze bei thermischer Belastung basische bzw. nukleophile Intermediate freisetzen, weswegen sie als latente Initiatoren zur Epoxidhärtung interessant sind: Für Imidazoliumiodide wurde bereits 1983 beschrieben (J. Polym. Sci.: Polym. Lett., 21 (1983), 633), dass bei 200°C eine Härtung von DEGBA (Diglycidylether von Bisphenol A) basierten Epoxy-Systemen initiiert werden kann. Es wird davon ausgegangen, dass ein intermediäres neutrales Imidazol entsteht. In einer Patentanmeldung der BASF von 2008 (WO 2008/ 152003A1) wird für die analogen Imidazoliumacetate eine ähnliche katalytische Wirkung beansprucht. Interne Versuche mit N-Alkylimidazolen als Organokatalysatoren für die Propoxilierung von Alkohol-Startern ergaben jedoch, dass die Reaktivität der Katalysatoren nicht gut zur Herstellung von höhermolekularen Produkten (OH-Zahl unter 150 mg KOH/ g) in der Praxis geeignet ist, da im OH-Zahl-Bereich unter 150 mg KOH/ g die geringe katalytische Aktivität der Alkylimidazol-Spezies zu sehr langen Zykluszeiten führt.

Es stellte sich daher die Aufgabe, ein Verfahren zur organokatalytischen ringöffnenden Polymerisation bereitzustellen, welches es möglich macht, in den oben genannten Bereich höhermolekularer Produkte zu gelangen, und welches nicht mit dem oben genannten Nachteil der Notwendigkeit stark basischer bzw. metallhaltiger Edukte behaftet ist. Das bedeutet, dass das Verfahren insbesondere keinen Einsatz starker Basen, wie beispielsweise Metallsalz-Basen, erfordern sollte.

Diese Aufgabe konnte nun überraschenderweise durch das in den Ansprüchen definierte Verfahren gelöst werden.

Überraschenderweise wurde nämlich gefunden, dass bestimmte Vertreter der oben erwähnten Dialkylimidazoliumsalze als Vorstufe verwendet werden können, ohne dass eine starke Base eingesetzt werden muss; somit entfällt die aufwändige Aufarbeitung des Produkts.

Der Gegenstand dieser Erfindung ist somit ein Verfahren zur organokatalytischen ringöffnenden Polymerisation mindestens eines zur ringöffnenden Polymerisation geeigneten Monomers M, oder von Mischungen daraus, wobei in einem Schritt (i) mindestens eine N-heterocyclische

Verbindung der Formel (I) 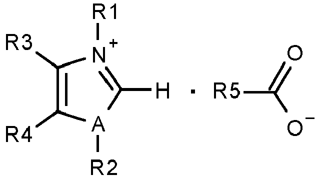 wobei A ausgewählt ist aus der Gruppe bestehend aus N, O und S, bevorzugt N - wobei kein Rest R2 vorliegt, wenn A gleich O oder S ist -, und wobei R1 und R2 jeweils unabhängig voneinander ausgewählt sind aus Alkyl und Aryl, und wobei R3, R4 und R5 jeweils unabhängig voneinander ausgewählt sind aus H, Alkyl, Aryl, und wobei auch Ringschlüsse zwischen R1 und R3, R3 und R4 sowie R4 und R2 möglich sind, in Gegenwart mindestens einer Zerewitinoff-aktiven Verbindung Z1 einer Temperatur von mindestens 80°C, bevorzugt mindestens 100°C, für eine Dauer von mindestens 30 Sekunden, bevorzugt mindestens 5 Minuten ausgesetzt wird, und in einem Schritt (ii) das Monomer M zugegeben und, bevorzugt in Gegenwart einer Zerewitinoff-aktiven Verbindung Z2, zur Reaktion gebracht wird.

Im Sinne dieser Erfindung bedeutet "Polymerisation" insbesondere die Reaktion mindestens dreier Wiederholungseinheiten; jedoch sind auch kürzere Oligomere umfasst.

Eine "Zerewitinoff-aktive Verbindung" bezieht sich auf Verbindungen, die acide genug sind, um gängige Grignard-Verbindungen zum Kohlenwasserstoff zu protonieren. Beispiele für "Zerewitinoff-aktive Vebindungen" sind Alkohole und Amine.

Eine Vielzahl an Verbindungen mit der Formel (I) ist käuflich erhältlich, z. B. die ionischen Flüssigkeiten Basionics™ von BASF SE.

In einer Ausführungsform des erfindungsgemäßen Verfahrens sind R1 und R2 jeweils primäre Alkylgruppen.

In einer anderen Ausführungsform des erfindungsgemäßen Verfahrens ist R1 eine primäre und R2 eine sekundäre Alkylgruppe.

In einer anderen Ausführungsform des erfindungsgemäßen Verfahrens sind R1 und R2 jeweils sekundäre Alkylgruppen.

In einer Ausführungsform des erfindungsgemäßen Verfahrens ist das Anion in der Formel (I) ausgewählt aus der Gruppe enthaltend Formiat, Acetat und Propionat.

In einer weiteren Ausführungsform des erfindungsgemäßen Verfahrens ist das Anion in der Formel (I) ausgewählt aus der Gruppe enthaltend Benzoat, Phthalat, Terephthalat und Isophthalat.

In einer weiteren Ausführungsform des erfindungsgemäßen Verfahrens ist das Anion in der Formel (I) ausgewählt aus der Gruppe enthaltend Salze aliphatischer Dicarbonsäuren, wie z. B. Succinat oder Glutarat.

In einer Ausführungsform des erfindungsgemäßen Verfahrens wird Schritt (ii) erst nach Ende des Schritts (i) durchgeführt.

In einer Ausführungsform des erfindungsgemäßen Verfahrens beginnt Schritt (ii) bereits während der Dauer des Schritts (i).

In einer Ausführungsform des erfindungsgemäßen Verfahrens ist mindestens eine Zerewitinoff-aktive Verbindung Z1 ausgewählt aus der Gruppe bestehend aus Alkoholen.

In einer weiteren Ausführungsform des erfindungsgemäßen Verfahrens ist mindestens eine Zerewitinoff-aktive Verbindung Z1 ausgewählt aus der Gruppe bestehend aus Aminen.

In einer weiteren Ausführungsform des erfindungsgemäßen Verfahrens werden mindestens zwei Zerewitinoff-aktive Verbindungen Z1 verwendet, wobei mindestens eine Zerewitinoff-aktive Verbindung Z1 a ausgewählt ist aus der Gruppe bestehend aus Alkoholen, und mindestens eine Zerewitinoff-aktive Verbindung Z1 b ausgewählt ist aus der Gruppe bestehend aus Aminen.

In einer weiteren Ausführungsform des erfindungsgemäßen Verfahrens ist mindestens eine Zerewitinoff-aktive Verbindung Z2 ausgewählt aus der Gruppe bestehend aus Alkoholen und Aminen, bevorzugt Alkoholen, und Mischungen daraus.

Die mindestens eine Zerewitinoff-aktive Verbindung Z1 ist bevorzugt ausgewählt aus der Gruppe bestehend aus Alkoholen, besonders bevorzugt ausgewählt aus der Gruppe der Polyole, insbesondere Glycerin, Ethylenglycol, Diethylenglycol, Propylenglycol, Dipropylenglycol, Pentaerythrit, Sorbitol, Saccharose, C₁- bis C₁₈-Diole, Rizinusöl, epoxydierte und ringgeöffnete Fettsäuren und deren Ester, Trimethylolpropan, Pentaerythrit, Zuckerverbindungen wie beispielsweise Glucose, Sorbit, Mannit und Saccharose, mehrwertige Phenole, Resole, wie z. B. oligomere Kondensationsprodukte aus Phenol und Formaldehyd und Mannich-Kondensate aus Phenolen, Formaldehyd, Dialkanolaminen, sowie Mischungen aus mindestens zwei der aufgeführten Verbindungen.

Ebenfalls bevorzugt ist mindestens eine Zerewitinoff-aktive Verbindung Z1 ausgewählt aus der Gruppe bestehend aus Aminen, insbesondere primären und sekundären aliphatischen und aromatischen Aminen oder Mischungen daraus, ganz besonders bevorzugt ausgewählt aus der Gruppe enthaltend Hexamethylendiamin, Ethylendiamin, Propylendiamin, Ethanolamin, Orthocyclohexandiamin, Aminocyclohexanalkylamin, und aromatische Amine ausgewählt aus der Gruppe enthaltend Toluoldiamin (TDA), insbesondere 2,3- und 3,4-Isomere von TDA, sowie Diphenylmethandiamin (MDA) und polymeres MDA (p-MDA), Melamin, und Mischungen daraus.

Die Zerewitinoff-aktive Verbindung Z1 kann auch mehrere Aminogruppen und/oder andere Zerewitinoff-aktive Gruppen, wie beispielsweise OH-Gruppen, enthalten.

In einer Ausführungsform des erfindungsgemäßen Verfahrens ist die Verbindung Z1 gleich der Verbindung Z2.

In einer anderen Ausführungsform des erfindungsgemäßen Verfahrens entspricht die Verbindung Z1 nicht der Verbindung Z2.

In einer bevorzugten Ausführungsform des erfindungsgemäßen Verfahrens wird im Schritt (i) keine Base mit einem pK_{b} (H₂O) kleiner 1 verwendet.

Das mindestens eine zur ringöffnenden Polymerisation geeignete Monomer M kann ausgewählt sein aus der Gruppe enthaltend Alkylenoxide, cyclische Lactone, Lactide, cyclische Siloxane, und Mischungen daraus, bevorzugt Mischungen enthaltend Alkylenoxide, besonders bevorzugt Alkylenoxide.

Die Alkylenoxide für das erfindungsgemäße Verfahren sind bevorzugt ausgewählt aus der Gruppe umfassend:

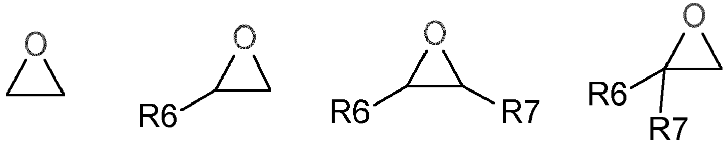

Dabei gilt: R6 und R7 sind jeweils ausgewählt aus der Gruppe umfassend Alkyl, Aryl, Alkenyl. Hierbei bedeutet Alkyl bevorzugt einen Rest ausgewählt aus der Gruppe der C1- bis C10-Alkylverbindungen, bevorzugt C1- bis C2-Verbindungen, besonders bevorzugt C1-Verbindungen.

Aryl bedeutet bevorzugt einen Phenyl-Rest.

Alkenyl bedeutet bevorzugt einen Rest ausgewählt aus der Gruppe der C2- bis C10-Alkyenlyverbindungen, bevorzugt eine C3-Alkenylverbindung.

In einer bevorzugten Ausführungsform der Erfindung ist das Alkylenoxid ausgewählt aus der Gruppe enthaltend Ethylenoxid (EO), Propylenoxid (PO) und Butylenoxid. In einer besonders bevorzugten Ausführungsform der Erfindung werden Mischungen enthaltend Propylenoxid verwendet.

In einer Ausführungsform des erfindungsgemäßen Verfahrens werden die Monomeren M bzw. deren Gehalt während der Reaktion variiert. Daher erlaubt das erfindungsgemäße Verfahren auch die Aufbringung eines Ethylenoxid (EO)-Endcaps.

Auch die Copolymerisation, zum Beispiel mit Lactonen, Lactid und/oder cyclischen Siloxanen, ist mit dem erfindungsgemäßen Verfahren möglich.

Beispiele geeigneter Lactone für die Copolymerisation mit Alkylenoxiden sind substitutuierte oder unsubstitutierte Lactone mit 4-gliedrigen oder größeren Ringen, wie beispielsweise β-Propiolacton, δ-Valerolacton, ε-Caprolacton, Methyl-ε-caprolacton, β,β-Dimethyl-β-propiolacton, β-Methyl-β-propiolacton, α-Methyl-β-propiolacton, α,α-Bis(chlormethyl)-propiolacton, Methyoxy-ε-caprolacton, Ethoxy-ε-caprolacton, Cyclohexyl-ε-caprolacton, Phenyl-ε-caprolacton, Benzyl-ε-caprolacton, ζ-Enantholacton, η-Caprylolacton, α,β,γ-Trimethoxy-δ-valerolacton, oder β-Butyrolactone, und Mischungen daraus. In einer Ausführungsform wird ε-Caprolacton verwendet.

Bevorzugt liegt die Temperatur im Schritt (i) des erfindungsgemäßen Verfahrens im Bereich von 140 °C bis 250 °C, besonders bevorzugt 140 °C bis 180 °C, ganz besonders bevorzugt 150°C bis 170°C.

Hierbei dauert der Schritt (i) in der Regel mindestens 30 Sekunden, bevorzugt 5 bis 30 Minuten, besonders bevorzugt 10 bis 25 Minuten.

In einer Ausführungsform des erfindungsgemäßen Verfahrens wird im Schritt (i) ein Vakuum angelegt.

Der Schritt (i) wird in einer Ausführungsform des erfindungsgemäßen Verfahrens in einer Apparatur durchgeführt, die ausgewählt ist aus der Gruppe bestehend aus Rührkesselreaktor, Rohrreaktor, Dünnschichtverdampfer (auch Fallfilmverdampfer genannt), Strippingkolonne, Flasher. Gegebenenfalls kann sich die Dauer von Schritt (i) durch diese Apparaturen auf bis zu wenige Sekunden reduzieren.

In einer bevorzugten Ausführungsform des erfindungsgemäßen Verfahrens ist das mindestens eine zur ringöffnenden Polymerisation geeignete Monomer M ausgewählt aus der Gruppe enthaltend Alkylenoxide und Mischungen daraus, wobei die Temperatur während der Umsetzung mit dem mindestens einen Monomer M im Schritt (ii) nach Ende des Schritts (i) im Bereich von 90°C bis 140°C, bevorzugt im Bereich von 100°C bis 130 °C liegt.

In einer weiteren bevorzugten Ausführungsform des erfindungsgemäßen Verfahrens ist das Monomer M ausgewählt aus der Gruppe bestehend aus Ethylenoxid, Propylenoxid, Butylenoxid und Mischungen daraus, bevorzugt Mischungen enthaltend Propylenoxid, und die Zerewitinoff-aktive Verbindung Z1 ist ausgewählt aus der Gruppe der Alkohole und Mischungen daraus, bevorzugt aus der Gruppe enthaltend Polyole, insbesondere Glycerin, Ethylenglycol, Diethylenglycol, Propylenglycol, Dipropylenglycol, Pentaerythrit, Sorbitol, Saccharose, C₁- bis C₁₈-Diole, Rizinusöl, epoxydierte und ringgeöffnete Fettsäuren und deren Ester, Trimethylolpropan, Pentaerythrit, Zuckerverbindungen wie beispielsweise Glucose, Sorbit, Mannit und Saccharose, mehrwertige Phenole, Resole, wie z. B. oligomere Kondensationsprodukte aus Phenol und Formaldehyd und Mannich-Kondensate aus Phenolen, Formaldehyd, Dialkanolaminen, Melamin, sowie Mischungen aus mindestens zwei der aufgeführten Verbindungen], und die Zerewitinoff-aktive Verbindung Z2 ist ausgewählt aus der Gruppe der Alkohole und Mischungen daraus, bevorzugt aus der Gruppe enthaltend Polyole, insbesondere Glycerin, Ethylenglycol, Diethylenglycol, Propylenglycol, Dipropylenglycol, Pentaerythrit, Sorbitol, Saccharose, C₁- bis C₁₈-Diole, Rizinusöl, epoxydierte und ringgeöffnete Fettsäuren und deren Ester, Trimethylolpropan, Pentaerythrit, Zuckerverbindungen wie beispielsweise Glucose, Sorbit, Mannit und Saccharose, mehrwertige Phenole, Resole, wie z. B. oligomere Kondensationsprodukte aus Phenol und Formaldehyd und Mannich-Kondensate aus Phenolen, Formaldehyd, Dialkanolaminen, Melamin, sowie Mischungen aus mindestens zwei der aufgeführten Verbindungen, und die Temperatur im Schritt (i) liegt im Bereich von 140 °C bis 180 °C für eine Dauer von 5 bis 30 Minuten, und die Temperatur im Schritt (ii) nach Ende des Schritts (i) liegt im Bereich von 90 °C bis 140 °C, bevorzugt im Bereich von 100 °C bis 130 °C.

Ein weiterer Gegenstand der vorliegenden Erfindung ist auch ein Polymerisations-Produkt, herstellbar nach dem erfindungsgemäßen Verfahren, sowie die Verwendung eines nach dem erfindungsgemäßen Verfahren herstellbaren Polymerisations-Produkts zur Herstellung von Polyurethanen.

### Beispiele

Im Folgenden werden zur Veranschaulichung einiger Aspekte der vorliegenden Erfindung einige Beispiele gegeben. Diese sollen keinesfalls den Umfang der Erfindung einschränken.

In den Versuchen wurden zuerst die Starter (Alkohole) und der Katalysator in einem Autoklaven vorgelegt, der zur Inertisierung mit Stickstoff befüllt, dann auf 110-130 °C erhitzt und für mehrere Stunden unter Vakuum entgast wurde. Bei den Versuchen mit thermischer Aktivierungsstufe (i) wurde der Kessel nun für 20 Minuten auf 160 °C erhitzt. Nach Abkühlen auf die gewünschte Reaktionstemperatur wurde dann in beiden Fällen das Propylenoxid kontinuierlich unter Rühren (Rührgeschwindigkeit 600 1/min) in Schritt (ii) zudosiert. Nach abgeschlossener Dosierung und Abreaktion des Monomers wurde der Kessel dann 30 Minuten unter Vakuum evakuiert und dann auf 25 °C abgekühlt.

In der schematischen Darstellung des Versuchsverlaufes sind die Dosierprofile (siehe Legende: "PO Dosierung... ") und die resultierenden Druckverläufe dargestellt. Durch den Druckverlauf ist eine Aussage über die Reaktivität des Katalysators möglich: Bei hoher Reaktivität wurde das Propylenoxid zügig umgesetzt und es hat sich kein hoher Druck im Kessel aufgebaut. Bei geringerer Reaktivität akkumulierte das Propylenoxid und es wurden höhere Drücke beobachtet. Bei Erreichen einer durch die Auslegung des Autoklaven gegebenen Druckobergrenze musste gegebenenfalls von einer konstanten Dosierrate abgewichen und die Dosierung gedrosselt oder sogar unterbrochen werden (dünnere unterbrochene Linien in der schematischen Darstellung), was zu einer Verlängerung der Dosierzeit und somit einer Reduktion der Dosierrate führte. Um den Druckverlauf quantifizieren und die Reaktivität vergleichen zu können, werden im Folgenden die maximal erreichten Drücke im Kessel sowie Dosierzeiten und resultierende mittlere Dosierraten angegeben.

Im Folgenden werden zahlreiche Beispiele angeführt, bei denen Produkte mit OH-Zahlen größer 150 synthetisiert wurden. Dies ist in der einfacheren Durchführung von Screening-Versuchen begründet; es wurde jedoch sichergestellt, dass die in diesem Screening für hochreaktiv befundenen Kandidaten bestens geeignet sind, zu den oben genannten hochmolekularen Produkten mit OH-Zahlen kleiner 150 zu gelangen (siehe auch Bsp. 3).

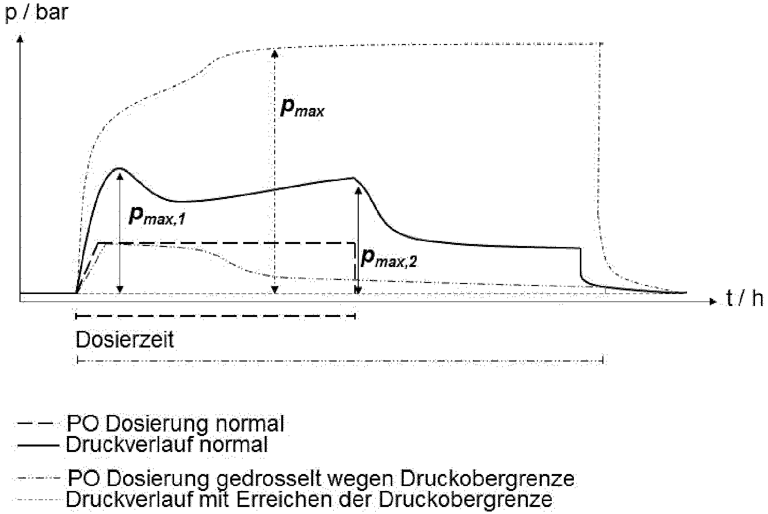

### Beispiel 1)

In einem 300 mL Kessel wurden 20,0 g Glycerin, 7,69 g Diethylenglycol und 0,47 g 1-Ethyl-3-methyl-imidazolium-Acetat vorgelegt. Nach der Inertisierung wurden 149,63 g Propylenoxid bei einer Reaktionstemperatur von 115 °C zudosiert. Da die Druckobergrenze von 9,89 bar erreicht wurde, musste die Dosierung gedrosselt werden. Nach einer Abreaktionszeit von über 8 Stunden wurden 154,8 g Produkt erhalten.

OHZ: 266 mg KOH/g

Polydispersität (GPC): 1,114

Viskosität: 172 mPas

p_{max,1} = 8,15 bar

pₘₐₓ = 9,89 bar

Dosierzeit: 420 Minuten

Dosierrate: 0,36 g/min

### Beispiel 2a)

In einem 300 mL Kessel wurden 20,0 g Glycerin, 7,69 g Diethylenglycol und 0,44g 1-Ethyl-3-methyl-imidazolium-Acetat vorgelegt. Nach der Inertisierung und einer Aktivierung bei 160 °C wurde auf eine Reaktionstemperatur von 115 °C abgekühlt und dann 149,63 g Propylenoxid zudosiert. Nach einer Abreaktionszeit von 5 Stunden wurden 164,8 g Produkt erhalten.

OHZ: 261 mg KOH/g

Polydispersität (GPC): 1,105

Viskosität: 176 mPas

p_{max,1} = 3,57 bar

p_{max,2} = 3,49 bar

Dosierzeit: 225 Minuten

Dosierrate: 0,66 g/min

### Beispiele 2b-e)

Unter analogen Bedingungen wie in Beispiel 2a beschrieben konnte auch mit anderen Katalysatoren ein ähnliches Produkt erhalten werden. Diese Katalysatoren unterschieden sich in den Beispielen 2b-e) nur bezüglich der 1,3-Alkylsubstitution (R1 und R2 in Formel (I)) vom Katalysator aus Beispiel 2a. Die jeweiligen Substituenten sowie die entsprechenden Ergebnisse sind in der folgenden Tabelle zusammengefasst. In den Beispielen 2f-g) unterscheiden sich die Katalysatoren dadurch vom Katalysator aus Beispiel 2a, dass das Heteroatom an Ringposition 1 nicht Stickstoff, sondern Sauerstoff (2f) beziehungsweise Schwefel (2g) ist und daher auch keinen Alkylsubstituenten R2 trägt.

| * | #2b | #2c | #2d | #2e | #2f (O) | #2g (S) |
|---|---|---|---|---|---|---|
| R1 | Methyl | Ethyl | n-Propyl | Isopropyl | Ethyl | Ethyl |
| R2 | Methyl | Ethyl | n-Propyl | Isopropyl | - | - |
| m(Kat.) | 0,37 g | 0,44 g | 0,50 g | 0,50 g | 0,38 g | 0,42 g |
| Aktiv. | Ja | Ja | Ja | Ja | Ja | Ja |
| Produkt | 165,5 g | 162,5 g | 166,3 g | 168,9 g | 148,5 g | 142,8 g |
| OHZ | 264 | 258 | 263 | 259 | 281 | 284 |
| PDI | 1,1004 | 1,106 | 1,103 | 1,102 | 1,122 | 1,127 |
| Visko | 178 | 148 | 169 | 145 | 245 | 251 |
| p_{max,1} | 4,3 | 3,5 | 3,9 | 4,0 | 5,6 | 6,2 |
| p_{max,2} | 3,8 | 3,4 | 3,5 | 3,3 | 4,8 | 5,7 |
| Zeit | 230 | 230 | 230 | 230 | 230 | 230 |
| Rate | 0,65 | 0,65 | 0,65 | 0,65 | 0,65 | 0,65 |

| | | | | | | |
|---|---|---|---|---|---|---|
| *Erläuterungen: m(Kat.) = Masse des Katalysators, Aktiv. = Aktivierung bei 160 °C für 20 Minuten, OHZ in mg KOH/g, PDI = Polydispersität (GPC), Visko = Viskosität in mPas, p_{max,1 und 2} in bar, Zeit = Dosierzeit in Minuten, Rate = Dosierrate in g/min | | | | | | |

### Beispiel 3)

In einem 5L Kessel wurden 200,0 g Glycerin und 30,0 g 1-Ethyl-3-methyl-imidazolium-Acetat (0,176 mol) vorgelegt. Nach erfolgter Inertisierung wurde der Kessel für 20 Minuten auf 160 °C erhitzt und danach auf die Reaktionstemperatur von 120 °C abgekühlt. Bei dieser Temperatur wurden 4488 g Propylenoxid zudosiert, wobei bei Erreichen der Druckobergrenze von 7,69 bar die Dosierung leicht gedrosselt werden musste. Nach einer Abreaktionszeit von 5 Stunden wurden 3678 g Produkt erhalten

OHZ: 96 mg KOH/g

Polydispersität (GPC): 1,126

Viskosität: 268 mPas

p_{max,1} = 4,81 bar

pₘₐₓ = 7,69 bar

Dosierzeit: 283 Minuten

Dosierrate: 15,86 g/min

### Beispiel 4)

In einem 5L Kessel wurden 200,0 g Glycerin und 14,47g N-Methylimidazol (0,176 mol) vorgelegt. Nach der Inertisierung wurde bei 120 °C Propylenoxid zudosiert (geplant: 4485,5 g). Bei Erreichen der Druckobergrenze von 7,60 bar wurde die Dosierung nach und nach immer stärker gedrosselt. So wurden innerhalb der ersten 7 Stunden und 40 Minuten der Dosierzeit 4089 g PO dosiert. Während der folgenden 13 Stunden konnte nur noch in viel geringeren Dosierraten (limitiert durch die Druckobergrenze) versucht werden, weitere kleine Mengen Propylenoxid nach zu dosieren, es konnten jedoch nur 337 g hinzugefügt werden, wodurch diese letzten 13 Stunden im Grunde nur der Abreaktion dienten. Schließlich wurden 3568 g Produkt erhalten.

OHZ: 112 mg KOH/g

Polydispersität (GPC): 1,133

Viskosität: 204 mPas

p_{max,1} = 5,34 bar

pₘₐₓ = 7,60 bar

primäre Dosierzeit: 460 Minuten (7 Stunden und 40 Minuten)

Bis dahin: 4089g PO

Dosierrate: 8,89 g/min

### Gesamt:

Dosierzeit: 1240 Minuten (20 Stunden, 40 Minuten)

Propylenoxid: 4426g

Dosierrate: 3,57 g/min

### Beispiele 5-12)

In einem 300 mL Kessel wurden 20,0 g Glycerin, 7,69 g Diethylenglycol und der Katalysator (Kat.) vorgelegt. Nach der Inertisierung und gegebenenfalls einer Aktivierung bei 160 °C wurden bei einer Reaktionstemperatur von 115 °C 149,63 g Propylenoxid zudosiert. Nach einer Abreaktionszeit von 5 Stunden wurde das Produkt isoliert. Die folgende Tabelle fasst die Versuchsbedingungen und Ergebnisse dieser Versuche zusammen.

| * | #5 (B) | #6 (B) | #7 (P) | #8 (P) | #9 (O) | #10 (O) | #11 (F) | #12 (F) |
|---|---|---|---|---|---|---|---|---|
| m(Kat.) | 0,97 g | 0,97 g | 0,84 g | 0,84 g | 1,05 g | 1,05 g | 0,65 g | 0,65 g |
| Aktiv. | Nein | Ja | nein | ja | nein | ja | nein | ja |
| Produkt | 163,5 g | 163,9 g | 163,1 g | 166,4 g | 166,0 g | 165,4 g | 167,0 g | 167,0 g |
| OHZ | 257 | 259 | 264 | 254 | 263 | 265 | 276 | 277 |
| PDI | 1,098 | 1,100 | 1,104 | 1,104 | 1,105 | 1,108 | 1,107 | 1,104 |
| Visko | 157 | 147 | 149 | 154 | 152 | 157 | 164 | 165 |
| p_{max,1} | 3,0 | 3,9 | 4,7 | 3,8 | 3,9 | 3,1 | 3,4 | 4,0 |
| p_{max,2} | 3,3 | 3,2 | 3,9 | 3,3 | 3,3 | 3,0 | 2,9 | 3,3 |
| Zeit | 240 | 240 | 240 | 240 | 240 | 240 | 240 | 240 |
| Rate | 0,62 | 0,62 | 0,62 | 0,62 | 0,62 | 0,62 | 0,62 | 0,62 |

| | | | | | | | | |
|---|---|---|---|---|---|---|---|---|
| B = 1-Ethyl-3-methyl-imidazolium-Benzoat P = 1-Ethyl-3-methyl-imidazolium-Pivalat O = 1-Ethyl-3-methyl-imidazolium-Octanoat F = 1-Ethyl-3-methyl-imidazolium-Formiat *Erläuterungen: m(Kat.) = Masse des Katalysators, Aktiv. = Aktivierung bei 160 °C für 20 Minuten, OHZ in mg KOH/g, PDI = Polydispersität (GPC), Visko = Viskosität in mPas, p_{max,1 und 2} in bar, Zeit = Dosierzeit in Minuten, Rate = Dosierrate in g/min | | | | | | | | |

### Beispiel 13)

In einem 300 mL Kessel wurden 20,0 g Glycerin, 7,69 g Diethylenglycol und 0,68 g 1-Ethyl-3-Methylimidazolium-Ethylsulfat vorgelegt. Nach der Inertisierung sollten bei einer Reaktionstemperatur von 115 °C 149,63 g Propylenoxid zudosiert werden. Hierbei wurde die Druckobergrenze von 9,79 bar erreicht und daher die Dosierung zunächst verlangsamt und dann ganz abgebrochen, da sich dieser Druck auch nach über 12 Stunden nicht abgebaut hat, also kein weitere Propylenoxid umgesetzt wurde. Es wurden nur 38,1 g Produkt erhalten.

OHZ: >650 mg KOH/g

Polydispersität (GPC): nicht bestimmt

Viskosität: nicht bestimmt

p_{max,1} = 9,79 bar

Dosierung abgebrochen

### Beispiel 14)

In einem 300 mL Kessel wurden 20,0 g Glycerin, 7,69 g Diethylenglycol und 0,68 g 1-Ethyl-3-Methylimidazolium-Ethylsulfat vorgelegt. Nach der Inertisierung und einer Aktivierung bei 160 °C wurde auf eine Reaktionstemperatur von 115 °C abgekühlt und dann 149,63 g Propylenoxid zudosiert. Hierbei wurde kontinuierlich ein höherer Druck von bis zu 8,39 bar aufgebaut, der sich auch nach 5 Stunden nicht abgebaut hat. Nach diesen 5 Stunden potentieller Abreaktionszeit wurden 33,8 g Produkt erhalten.

OHZ: >650 mg KOH/g

Polydispersität (GPC): nicht bestimmt

Viskosität: nicht bestimmt

pₘₐₓ = 8,39 bar

Dosierzeit: 240 Minuten

Dosierrate: 0,62 g/min

### Beispiel 15)

In einem 300 mL Kessel wurden 20,0 g Glycerin, 7,69 g Diethylenglycol und 1,34 g Tetrabutylammoniumacetat vorgelegt. Nach der Inertisierung sollten bei einer Reaktionstemperatur von 115 °C 149,63 g Propylenoxid zudosiert werden. Hierbei wurde die Druckobergrenze von 9,79 bar erreicht und daher die Dosierung zunächst verlangsamt und dann ganz abgebrochen, da sich dieser Druck auch nach über 15 Stunden nicht abgebaut hat, also kein weitere Propylenoxid umgesetzt wurde. Es wurden nur 95,2 g Produkt erhalten.

OHZ: 392 mg KOH/g

Polydispersität (GPC): 1,094

Viskosität: 219 mPas

p_{max,1} = 9,79 bar

Dosierung abgebrochen

### Beispiel 16)

In einem 5 L Kessel wurden 3168 g eines auf Glycerin basierenden Polypropoxylates (OHZ = 62 mg KOH/g, Polydispersität (GPC) = 1,554) und 30 g 1-Ethyl-3-methyl-imidazolium-Acetat vorgelegt. Nach der Inertisierung wird Stickstoff bis auf einen Druck von 3,5 bar aufgepresst und dann 497 g Ethylenoxid bei einer Reaktionstemperatur von 120 °C zudosiert. Nach einer Abreaktionszeit von 2 Stunden wurden 3594 g Produkt erhalten.

OHZ: 51 mg KOH/g

Polydispersität (GPC): 1,554

Viskosität: 732 mPas

p_{max,1} = 4,9 bar

p_{max,2} = 5,3 bar

Dosierzeit: 165 Minuten

Dosierrate: 3,01 g/min

## Patentansprüche

1. Verfahren zur organokatalytischen ringöffnenden Polymerisation mindestens eines zur ringöffnenden Polymerisation geeigneten Monomers M, oder von Mischungen daraus, wobei in einem Schritt (i) mindestens eine N-heterocyclische Verbindung der Formel (I) 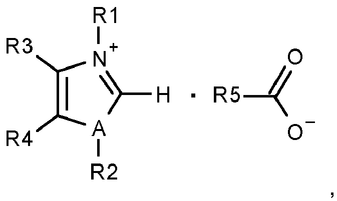 wobei A ausgewählt ist aus der Gruppe bestehend aus N, O und S, bevorzugt N - wobei kein Rest R2 vorliegt, wenn A gleich O oder S ist -, und wobei R1 und R2 jeweils unabhängig voneinander ausgewählt sind aus Alkyl und Aryl, und wobei R3, R4 und R5 jeweils unabhängig voneinander ausgewählt sind aus H, Alkyl, Aryl, und wobei auch Ringschlüsse zwischen R1 und R3, R3 und R4 sowie R4 und R2 möglich sind, in Gegenwart mindestens einer Zerewitinoff-aktiven Verbindung Z1 einer Temperatur von mindestens 80 °C, bevorzugt mindestens 100 °C, für eine Dauer von mindestens 30 Sekunden, bevorzugt mindestens 5 Minuten ausgesetzt wird, und in einem Schritt (ii) das Monomer M zugegeben und, bevorzugt in Gegenwart einer Zerewitinoff-aktiven Verbindung Z2, zur Reaktion gebracht wird.

2. Verfahren zur organokatalytischen ringöffnenden Polymerisation gemäß Anspruch 1, wobei R1 und R2 jeweils primäre Alkylgruppen sind.

3. Verfahren zur organokatalytischen ringöffnenden Polymerisation gemäß Anspruch 1, wobei R1 eine primäre und R2 eine sekundäre Alkylgruppe ist.

4. Verfahren zur organokatalytischen ringöffnenden Polymerisation gemäß Anspruch 1, wobei R1 und R2 jeweils sekundäre Alkylgruppen sind.

5. Verfahren zur organokatalytischen ringöffnenden Polymerisation gemäß einem der Ansprüche 1 bis 4, wobei das Anion in der Formel (I) ausgewählt ist aus der Gruppe enthaltend Formiat, Acetat und Propionat.

6. Verfahren zur organokatalytischen ringöffnenden Polymerisation gemäß einem der Ansprüche 1 bis 4, wobei das Anion in der Formel (I) ausgewählt ist aus der Gruppe enthaltend Benzoat, Phthalat, Terephthalat, Isophthalat, Succinat und Glutarat.

7. Verfahren zur ringöffnenden Polymerisation gemäß einem der Ansprüche 1 bis 6, wobei Schritt (ii) erst nach Ende des Schritts (i) durchgeführt wird.

8. Verfahren zur ringöffnenden Polymerisation gemäß einem der Ansprüche 1 bis 6, wobei Schritt (ii) bereits während der Dauer des Schritts (i) beginnt.

9. Verfahren zur ringöffnenden Polymerisation gemäß einem der vorangehenden Ansprüche, wobei mindestens eine Zerewitinoff-aktive Verbindung Z1 ausgewählt ist aus der Gruppe bestehend aus Alkoholen.

10. Verfahren zur ringöffnenden Polymerisation gemäß einem der vorangehenden Ansprüche, wobei mindestens eine Zerewitinoff-aktive Verbindung Z1 ausgewählt ist aus der Gruppe bestehend aus Aminen.

11. Verfahren zur ringöffnenden Polymerisation gemäß einem der vorangehenden Ansprüche, wobei mindestens zwei Zerewitinoff-aktive Verbindungen Z1 verwendet werden, wobei mindestens eine Zerewitinoff-aktive Verbindung Z1 a ausgewählt ist aus der Gruppe bestehend aus Alkoholen, und mindestens eine Zerewitinoff-aktive Verbindung Z1 b ausgewählt ist aus der Gruppe bestehend aus Aminen.

12. Verfahren zur ringöffnenden Polymerisation gemäß einem der vorangehenden Ansprüche, wobei mindestens eine Zerewitinoff-aktive Verbindung Z2 ausgewählt ist aus der Gruppe bestehend aus Alkoholen und Aminen, bevorzugt Alkoholen, und Mischungen daraus.

13. Verfahren zur ringöffnenden Polymerisation gemäß einem der Ansprüche 1 bis 12, wobei die Verbindung Z2 gleich der Verbindung Z1 ist.

14. Verfahren zur ringöffnenden Polymerisation gemäß einem der Ansprüche 1 bis 12, wobei die Verbindung Z2 nicht der Verbindung Z1 entspricht.

15. Verfahren zur ringöffnenden Polymerisation gemäß einem der vorangehenden Ansprüche, wobei im Schritt (i) keine Base mit einem pK_{b} (H₂O) kleiner 1 verwendet wird.

16. Verfahren zur ringöffnenden Polymerisation gemäß einem der vorangehenden Ansprüche, wobei das mindestens eine zur ringöffnenden Polymerisation geeignete Monomer M ausgewählt ist aus der Gruppe enthaltend Alkylenoxide, cyclische Lactone, Lactide, cyclische Siloxane, und Mischungen daraus, bevorzugt Mischungen enthaltend Alkylenoxide, besonders bevorzugt Alkylenoxide.

17. Verfahren zur ringöffnenden Polymerisation gemäß Anspruch 16, wobei mindestens ein Alkylenoxid ausgewählt ist aus der Gruppe bestehend aus Ethylenoxid, Propylenoxid, Butylenoxid und Mischungen daraus, bevorzugt Mischungen enthaltend Propylenoxid, besonders bevorzugt Propylenoxid.

18. Verfahren zur ringöffnenden Polymerisation gemäß einem der vorangehenden Ansprüche, wobei mindestens zwei zur ringöffnenden Polymerisation geeignete Monomere M verwendet werden, wobei mindestens eines der zur ringöffnenenden Polymerisation geeigneten Monomere ausgewählt ist aus der Gruppe der Alkylenoxide, und wobei mindestens eines der zur ringöffnenenden Polymerisation geeigneten Monomere ausgewählt ist aus der Gruppe der Lactone.

19. Verfahren zur ringöffnenden Polymerisation gemäß einem der vorangehenden Ansprüche, wobei die Temperatur im Schritt (i) im Bereich von 140 °C bis 250 °C, bevorzugt 140 °C bis 180 °C, besonders bevorzugt 150 °C bis 170 °C liegt.

20. Verfahren zur ringöffnenden Polymerisation gemäß einem der vorangehenden Ansprüche, wobei der Schritt (i) mindestens 30 Sekunden, bevorzugt 5 bis 30 Minuten, besonders bevorzugt 10 bis 25 Minuten dauert.

21. Verfahren zur ringöffnenden Polymerisation gemäß einem der vorangehenden Ansprüche, wobei während des Schritts (i) ein Vakuum angelegt wird.

22. Verfahren zur ringöffnenden Polymerisation gemäß einem der vorangehenden Ansprüche, wobei das mindestens eine zur ringöffnenden Polymerisation geeignete Monomer M ausgewählt ist aus der Gruppe enthaltend Alkylenoxide und Mischungen daraus, wobei die Temperatur während der Umsetzung mit dem mindestens einen Monomer M im Schritt (ii) nach Ende des Schritts (i) im Bereich von 90 °C bis 140 °C, bevorzugt im Bereich von 100 °C bis 130 °C liegt.

23. Verfahren zur ringöffnenden Polymerisation gemäß einem der vorangehenden Ansprüche, wobei das Monomer M ausgewählt ist aus der Gruppe bestehend aus Ethylenoxid, Propylenoxid, Butylenoxid und Mischungen daraus, bevorzugt Mischungen enthaltend Propylenoxid, und die Zerewitinoff-aktive Verbindung Z1 ausgewählt ist aus der Gruppe der Alkohole und Mischungen daraus, bevorzugt aus der Gruppe enthaltend Polyole, insbesondere Glycerin, Ethylenglycol, Diethylenglycol, Propylenglycol, Dipropylenglycol, Pentaerythrit, Sorbitol, Saccharose, C₁- bis C₁₈-Diole, Rizinusöl, epoxydierte und ringgeöffnete Fettsäuren und deren Ester, Trimethylolpropan, Pentaerythrit, Zuckerverbindungen wie beispielsweise Glucose, Sorbit, Mannit und Saccharose, mehrwertige Phenole, Resole, wie z. B. oligomere Kondensationsprodukte aus Phenol und Formaldehyd und Mannich-Kondensate aus Phenolen, Formaldehyd, Dialkanolaminen, Melamin, sowie Mischungen aus mindestens zwei der aufgeführten Verbindungen, und die Zerewitinoff-aktive Verbindung Z2 ausgewählt ist aus der Gruppe der Alkohole und Mischungen daraus, bevorzugt aus der Gruppe enthaltend Polyole, insbesondere Glycerin, Ethylenglycol, Diethylenglycol, Propylenglycol, Dipropylenglycol, Pentaerythrit, Sorbitol, Saccharose, C₁-bis C₁₈-Diole, Rizinusöl, epoxydierte und ringgeöffnete Fettsäuren und deren Ester, Trimethylolpropan, Pentaerythrit, Zuckerverbindungen wie beispielsweise Glucose, Sorbit, Mannit und Saccharose, mehrwertige Phenole, Resole, wie z. B. oligomere Kondensationsprodukte aus Phenol und Formaldehyd und Mannich-Kondensate aus Phenolen, Formaldehyd, Dialkanolaminen, Melamin, sowie Mischungen aus mindestens zwei der aufgeführten Verbindungen, und die Temperatur im Schritt (i) im Bereich von 140 °C bis 180 °C für eine Dauer von 5 bis 30 Minuten liegt, und die Temperatur im Schritt (ii) nach Ende des Schritts (i) im Bereich von 90 °C bis 140 °C, bevorzugt im Bereich von 100 °C bis 130 °C liegt.

24. Polymerisations-Produkt, herstellbar nach dem Verfahren eines der Ansprüche 1 bis 23.

25. Verwendung eines nach dem Verfahren eines der Ansprüche 1 bis 23 herstellbaren Polymerisations-Produkts zur Herstellung von Polyurethanen.
